# EUROPÄISCHE PATENTSCHRIFT

(11) **EP 3 372 970 B1**
(45) Veröffentlichungstag und Bekanntmachung des Hinweises auf die Patenterteilung: **28.08.2019**
(21) Anmeldenummer: 18159371.6
(22) Anmeldetag: 01.03.2018
(51) Int. Cl.: G01L 1/22, G01L 5/00

(54) **KRAFTAUFNEHMERSYSTEM ZUM MESSEN VON SCHERKRÄFTEN AUF EINEN KRAN-ROLLENKOPF**
FORCE SENSOR SYSTEM FOR MEASURING SHEAR RESISTANCE ON A CRANE ROLLER HEAD
SYSTÈME DE CAPTEUR DE FORCE PERMETTANT DE MESURER LA FORCE DE CISAILLEMENT SUR UNE TÊTE DE ROULEAU D'UNE GRUE

(30) Priorität: 07.03.2017 DE 102017104758
(43) Veröffentlichungstag der Anmeldung: 12.09.2018
(73) Patentinhaber: Brosa AG, 88069 Tettnang (DE)
(72) Erfinder: Igel, Raimund, 88069 Tettnang (DE); Schell, Sebastian, 88214 Ravensburg (DE); Welzel, Christian, 9464 Rüthi (CH)
(74) Vertreter: Witte, Weller & Partner Patentanwälte mbB

(56) Entgegenhaltungen:
- WO-A1-03/073057
- WO-A1-2011/104293
- DE-A1-102012 213 698

## Beschreibung

Die Erfindung betrifft ein Kraftaufnehmersystem zum Messen einer (Scher-)Kraft auf ein von einem Benutzer bereitgestelltes Maschinengestell, insbesondere auf einen (Kran-) Rollenkopf, wobei das Maschinengestell koaxial zu einer Maschinengestellachse eine, vorzugsweise ebenfalls vom Benutzer bereitgestellte, (Hohl-)Welle aufnimmt, auf der mindestens eine Seilrolle platzierbar ist. Insbesondere werden durch Scherkräfte hervorgerufene Verformungen mittels Dehnungsmessstreifen (DMS) gemessen, wobei die zu messende Kraft von außen schräg zur Maschinengestellachse auf das System einwirkt. Das Kraftaufnehmersystem misst bevorzugt nach dem Scherprinzip, um größere Kräfte messen zu können, als es nach dem Biegeprinzip möglich wäre.

Herkömmliche Kraftaufnehmer weisen einen Messkörper, vorzugsweise aus Stahl, auf, der an einer oder mehreren Stellen hinsichtlich seiner Materialstärke geschwächt ist, um dort eine membranartige Zone auszubilden, wo eine oder mehrere Messzellen (DMS) angeorndnet werden, um durch mechanische Verformungen hervorgerufene Dehnungen und/oder Stauchungen, d.h. Biegungen, zu messen, aus denen auf eine die Dehnung und/oder Stauchung verursachende Kraft zurückgeschlossen werden kann.

Je nach Anwendung werden meistens sog. Messachsen (siehe z.B. DE 103 02 349 B3, DE 103 02 352 A1, WO 2008/110360 A1 oder DE 102 45 768 A1) oder Messhülsen (siehe z.B. EP 2 538 189 A1) eingesetzt. Die herkömmlichen Messachsen und Messhülsen weisen in der Regel einen zylindrischen Körper auf. Die Messhülsen sind Hohlzylinder, in welche kunden- bzw. benutzerseitig bereitgestellte (Maschinen-)Achsen, vorzugsweise formschlüssig, einführbar sind. Die Messachsen sind ein- oder mehrteilige Zylinder, die in benutzer- bzw. kundenseitig vorgegebene Bauräume eingeführt werden. Klassische Anwendungsbeispiele sind Seilrollen, wie sie z.B. bei Aufzügen oder Kränen eingesetzt werden. Die vorliegende Erfindung ist jedoch nicht auf den Einsatz mit Seilrollen eingeschränkt.

Herkömmliche Kraftaufnehmersind fehleranfällig, insbesondere wenn parasitäre Kräfte beteiligt sind. Ferner können sich Materialeigenschaften des Kraftaufnehmers bei Überlasten dauerhaft derart verändern (z.B. durch plastische Verformung), dass keine auswertbaren elektrischen Messsignale mehr von den Messzellen bzw. - sensoren (DMS) geliefert werden können. Der Kraftaufnehmer ist dann defekt.

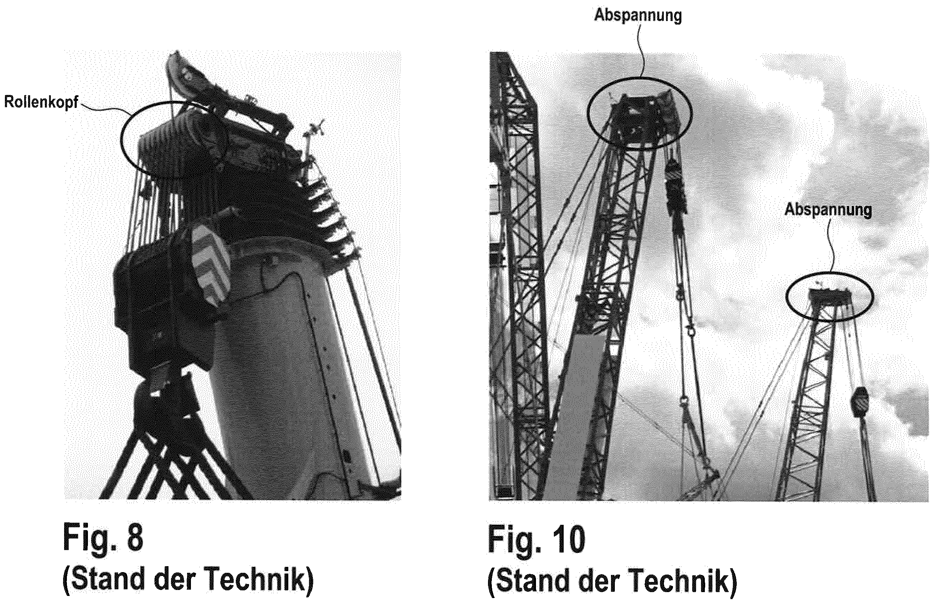

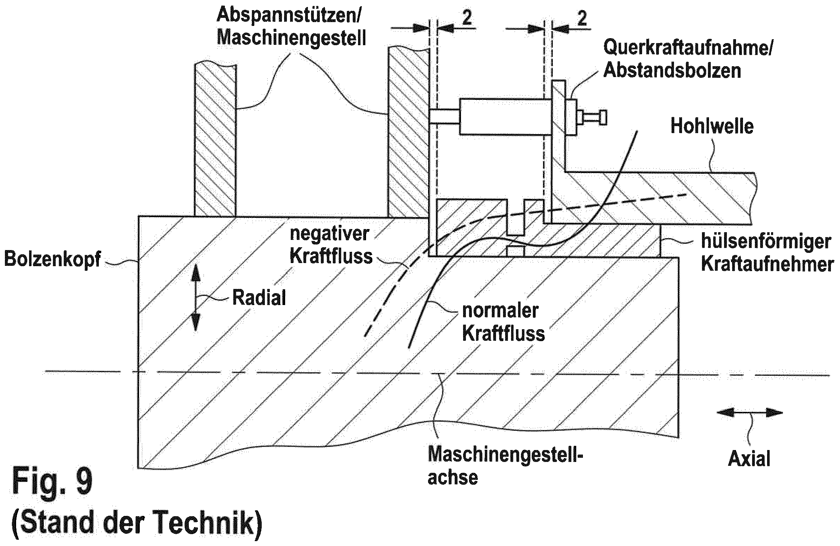

Eine Bauform (Geometrie) von herkömmlichen Kraftmessachsen, welche üblicherweise einen Scherkraftaufnehmer darstellen, ist hinreichend bekannt. Für die Problemstellung der Messung an einem Kran-Rollenkopf (siehe Fig. 8) wurde bisher die Bauform der Kraftmesshülse eingesetzt (vgl. Fig. 9). In Fig. 9 ist ein herkömmlicher, hülsenförmiger Kraftaufnehmer sowohl radial als auch axial zwischen einer Hohlwelle und einem Bolzenkopf positioniert. Der Bolzenkopf sitzt in einem Maschinengestell. Die Hohlwelle und das Maschinengestell werden vom Kunden bzw. Benutzer bereitgestellt, d.h. vorgegeben. Der hülsenförmige Kraftaufnehmer muss für genaue und richtige Kraftmessungen einen axialen Abstand sowohl zur Hohlwelle als auch zum Bolzenkopf aufweisen, um keine parasitären Kräfte zu messen, die z.B. durch eine Abspannung (vgl. Fig. 10) eines Auslegers in den Rollenkopf eingeleitet werden können und dann zu einer Beeinträchtigung des eigentlichen Messsignals führen können, das durch die Kräfte auf die Seilrollen hervorgerufen wird. Eine (hintere) herkömmliche Abspannung ist in Fig. 10 gezeigt.

Ein normaler, regulärer Kraftfluss durch den hülsenförmigen Kraftaufnehmer ist in Fig. 9 mit einer durchgezogenen Linie angedeutet. Der reguläre Kraftfluss wird z.B. durch eine Seilrolle (nicht gezeigt) hervorgerufen, die radial außen auf der Hohlwelle aufsitzt. Ein negativer, d.h. qualitativ schlechter, Kraftfluss ist durch eine Strichlinie angedeutet. Der negative Kraftfluss entsteht, wenn eine weitere Kraft zusätzlich z.B. über die Abspannstützen eingeleitet wird und den normalen Kraftfluss im Kraftaufnehmer "ab- bzw. umlenkt". Diese parasitäre Kraft bewirkt schlimmstenfalls, dass der hülsenförmige Kraftaufnehmer - durch z.B. elastische Verformung der Abspannstützen - an dem Bolzenkopf und/oder der Hohlwelle anliegt. Der daus resultierende negative Kraftfluss kann im schlimmsten Fall auch nicht durch eine Querkraftaufnahme verhindert werden, die durch einen starren, axial ausgerichteten Abstandshalter zwischen der Hohlwelle und dem Bolzenkopf bzw. den Abspannstützen definiert sein kann.

Das in der Fig. 9 gezeigte Gesamtsystem (Kraftaufnehmer, Maschinengestell, Bolzenkopf und Hohlwelle) ist schwierig zu installieren, insbesondere weil die mittig im Inneren angeordnete Kraftmesshülse schwierig in axialer Richtung zu positionieren ist und schwer zugänglich ist. Des Weiteren ist es schwierig sicherzustellen, dass die Kraftmesshülse die gewünschte Axialposition bzw. das axiale Spiel zu beiden Seiten beibehält. Die Positionierung der Kraftmesshülse axial zwischen der Hohlwelle und dem Maschinengestell ist schwierig, weil die entsprechenden Elemente schwer von außen zugänglich sind. Dies trifft sowohl für die radiale als auch die axiale Richtung zu.

Das Dokument DE 10 2012 213 698 A1 offenbart eine Kraftmessachse mit orientierter Anbringung. Das Dokument WO 2011/104293 A1 offenbart einen Kraftmess-Körper sowie ein Mess- und Berechnungsverfahren. Das Dokument DE 26 50 442 A1 offenbart eine Kraftmessvorrichtung für ein Hebezeug mit einem durch einen Arbeitzylinder betriebenen Kranausleger.

Es ist daher eine Aufgabe der vorliegenden Erfindung, ein Kraftaufnehmersystem insbesondere für die oben beschriebenen Anwendungen bereitzustellen, das leichter zu installieren ist und das einfacher zu positionieren ist.

Diese Aufgabe wird gelöst durch ein Kraftaufnehmersystem zum Messen einer
(Scher-)Kraft auf ein von einem Benutzer bereitgestelltes Maschinengestell, insbesondere einen Kran-Rollenkopf, welches Maschinengestell koaxial zu einer Maschinengestellachse eine vorzugsweise vom Benutzer bereitgestellte (Hohl-)Welle aufnimmt, auf der mindestens eine Seilrolle platzierbar ist und die mindestens einen axialen Endabschnitt - vorzugsweise zwei sich diametral gegenüberliegende axiale Endabschnitte - aufweist, der vorzugsweise eine axial nach außen orientierte Aufnahmeöffnung aufweist, wobei die Kraft im Wesentlichen von radial außen, quer zur Maschinengestellachse einwirkt, wobei das Kraftaufnehmersystem mindestens einen Messkörper aufweist, der in einem montierten Zustand, in welchem Zustand das Maschinengestell, die Welle und das Kraftaufnehmersystem dauerhaft aneinandergekoppelt sind, koaxial zur Maschinengestellachse angeordnet ist, wobei jeder der Messkörper einen Einführabschnitt aufweist. Der Einführabschnitt weist einen ersten axialen Abschnitt auf, der eingerichtet ist, im montierten Zustand formschlüssig im Maschinengestell zu sitzen, um den Messkörper am Maschinengestell abzustützen. Der Einführabschnitt weist ferner einen zweiten axialen Abschnitt auf, der zum Aufnehmen mindestens einer Messzelle eingerichtet ist, die, vorzugsweise ausschließlich, eine durch die Kraft hervorgerufene mechanische Verformung des Messkörpers in ein entsprechendes elektrisches Messsignal umwandelt. Der Einführabschnitt weist ferner einen dritten axialen Abschnitt auf, der eingerichtet ist, im montierten Zustand formschlüssig in oder auf der Welle zu sitzen, wobei der zweite Abschnitt durch eine Umfangsnut zwischen dem ersten und dritten Abschnitt gebildet ist und wobei der Einführabschnitt eine axiale Gesamtlänge aufweist, die so kurz ist, dass im montierten Zustand der dritte Abschnitt axial nur in den Endabschnitt hineinragt oder dass maximal nur der Endabschnitt axial in den dritten Abschnitt hineinragt.

Der Messkörper des Systems ist frei von außen zugänglich und kann von außen einfach eingebaut und fixiert werden. Die Anzahl der verbauten Elemente reduziert sich, weil z.B. auf den herkömmlichen, axial außen sitzenden Bolzenkopf verzichtet werden kann. Die Axialrelativpositionierung des Messkörpers vereinfacht sich.

Vorzugsweise weist der dritte Abschnitt und/oder der Endabschnitt eine Axialrelativpositioniereinrichtung auf, die die Welle im montierten Zustand immer axial beabstandet zum Maschinengestell hält. Dies bedeutet, dass der entsprechende axiale Abstand unter allen Bedingungen beibehalten wird.

Die Axialrelativpositioniereinrichtung verhindert, dass sich die Welle und das Maschinengestell derart axial zueinander bewegen, dass der axiale Mindestabstand unterschritten wird. Die Welle und das Maschinengestell können sich nicht mehr berühren, selbst wenn z.B. große parasitäre Kräfte, wie z.B. durch die Abspannung, auf das Gesamtsystem einwirken und das Maschinengestell (elastisch) verformen. Die Axialrelativpositioniereinrichtung kann in verschiedenen Formen implementiert sein, wie es nachfolgend noch näher ausgeführt werden wird. Die Axialrelativpositionierung ist so ausgestaltet, dass sich der axiale Mindestabstand zwischen der Welle und dem Maschinengestell automatisch einstellt, indem der Messkörper montiert (z.B. axial eingeführt) wird.

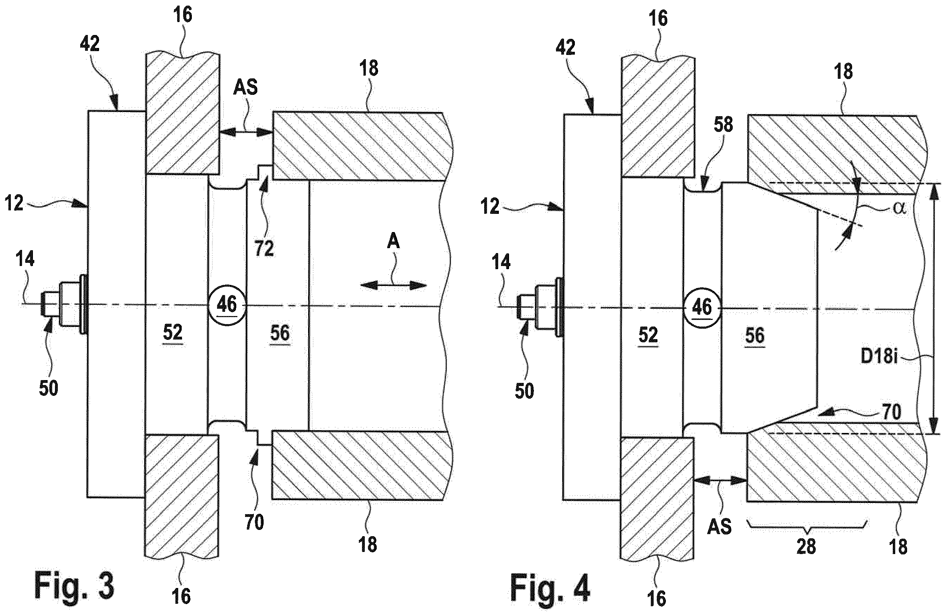

Bei einer Ausgestaltung ist die Axialrelativpositioniereinrichtung des dritten Abschnitts durch eine sich verjüngende Außenkontur des dritten Abschnitts implementiert, wobei sich die Außenkontur axial in Richtung einer Aufnahmeöffnung des Endabschnitts, vorzugsweise konisch, verjüngt, wobei ein Verjüngungswinkel und eine axiale Länge des dritten Abschnitts so gewählt sind, dass die Welle im montierten Zustand nicht an das Maschinengestell anstößt, wenn die Welle und der dritte Abschnitt axial maximal ineinandergreifen (vgl. z.B. Fig. 4).

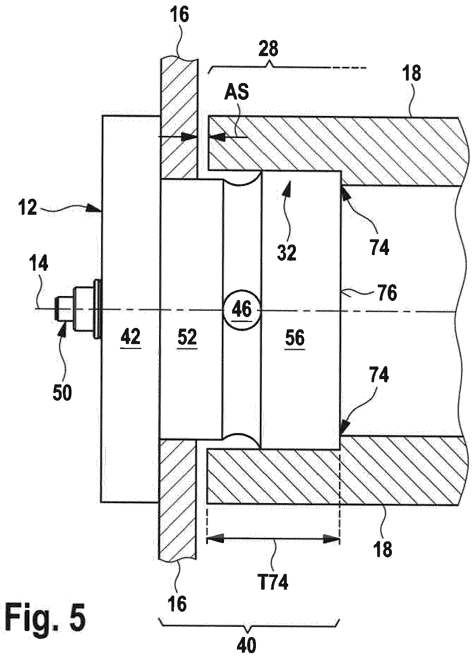

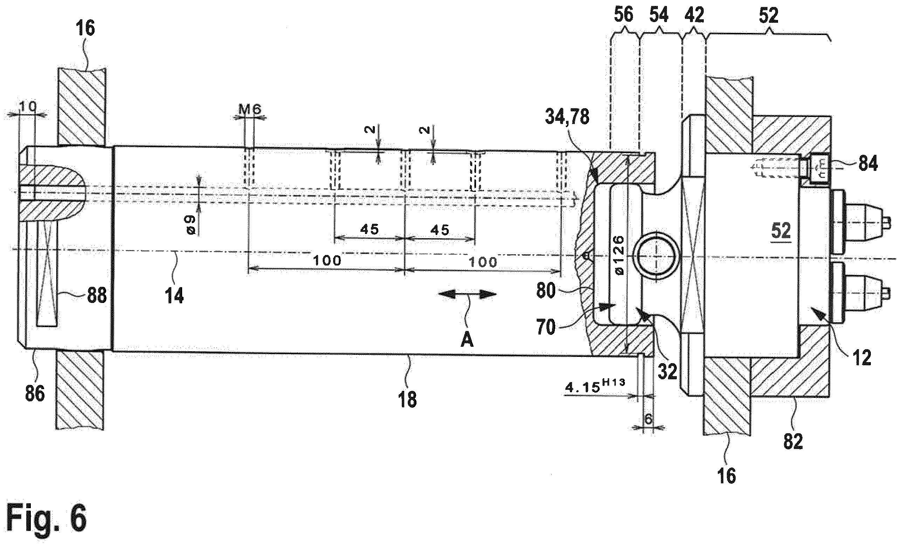

Bei einer anderen Implementierung der Axialrelativpositioniereinrichtung ist der dritte Abschnitt (hinsichtlich seiner Außenkontur) zylindrisch ausgebildet, und eine im Wesentlichen axial orientierte Innenkontur einer Aufnahmeöffnung des Endabschnitts weist eine radiale Stufe oder einen radialen Boden auf, so dass im montierten Zustand eine Stirnseite des dritten Abschnitts flächig an der Stufe anliegt oder dem Boden anliegen kann (vgl. z.B. Fig. 5 und 6).

Insbesondere sind eine axiale Länge des dritten Abschnitts und eine axiale Tiefe der Stufe bzw. des Bodens in Bezug zu einer Stirnseite des Endabschnitts sowie ein Außenkonturverlauf des zweiten Abschnitts so aufeinander abgestimmt, dass sich der dritte Abschnitt und die Welle relativ zueinander axial bewegen können, bis der dritte Abschnitt an die Stufe oder den Boden anstößt (vgl. z.B. Fig. 5 und 6).

Bei einer anderen Implementierung der Axialrelativpositioniereinrichtung ist ein radialer Vorsprung im, vorzugswiese zylindirschen, dritten Abschnitt ausgebildet, wobei eine axiale Position des radialen Vorsprungs passend gewählt ist.

Der radiale Vorsprung dient als (axialer) Anschlag für die Welle (vgl. z.B. Fig. 3) und stellt das Axialspiel zwischen der Welle und dem Maschinengestell sicher.

Insbesondere weist der radiale Vorsprung auf: einen Sicherungsring innerhalb einer Umfangsvertiefung im dritten Abschnitt; ein Außengewinde; eine Passfeder; oder mindestens einen, umfänglich diskret angeordneten Sicherungsstift.

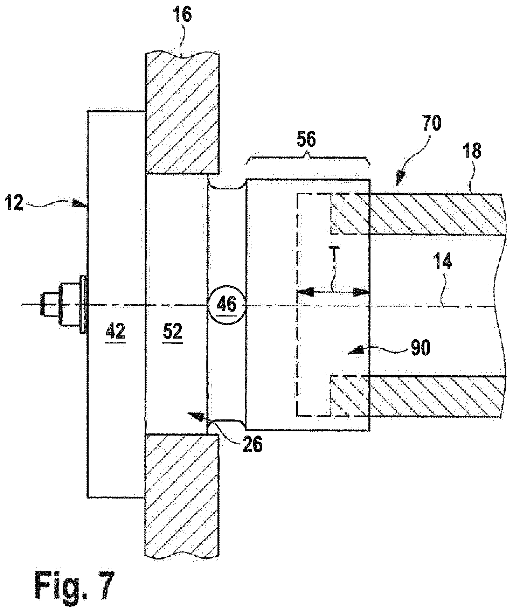

Bei einer weiteren Implementierung der Axialrelativpositioniereinrichtung umfasst diese eine stirnseitige Aufnahmeöffnung im dritten Abschnitt, in welche die Welle im montierten Zustand formschlüssig eingreift, wobei eine axiale Tiefe der stirnseitigen Aufnahmeöffnung im dritten Abschnitt entsprechend gewählt ist (vgl. z.B. Fig. 7).

Allgemein ist es möglich, dass jeder der Messkörper ferner einen Flanschabschnitt aufweist, wobei der Flanschabschnitt, vorzugsweise einstückig, an den Einführabschnitt angrenzt, so dass der Flanschabschnitt einen kragenförmigen Anschlag bildet, der im montierten Zustand am Maschinengestell, vorzugsweise flächig, anliegt.

Weiter ist es allgemein möglich, dass der Flanschabschnitt radial außen eine oder mehrere axiale Durchgangsöffnungen aufweist, die entlang einer Umfangsrichtung, vorzugsweise gleichmäßig, verteilt angeordnet sind, um Befestigungsmittel aufzunehmen, die von axial außen form- und/oder kraftschlüssig in das Maschinengestell eingreifen.

Mittels der Durchgangsöffnungen können z.B. (Gewinde-)Schrauben von axial außen durch den Flanschabschnitt in das Maschinengestell eingreifen, um den Messkörper dauerhaft am Maschinengestell zu fixieren.

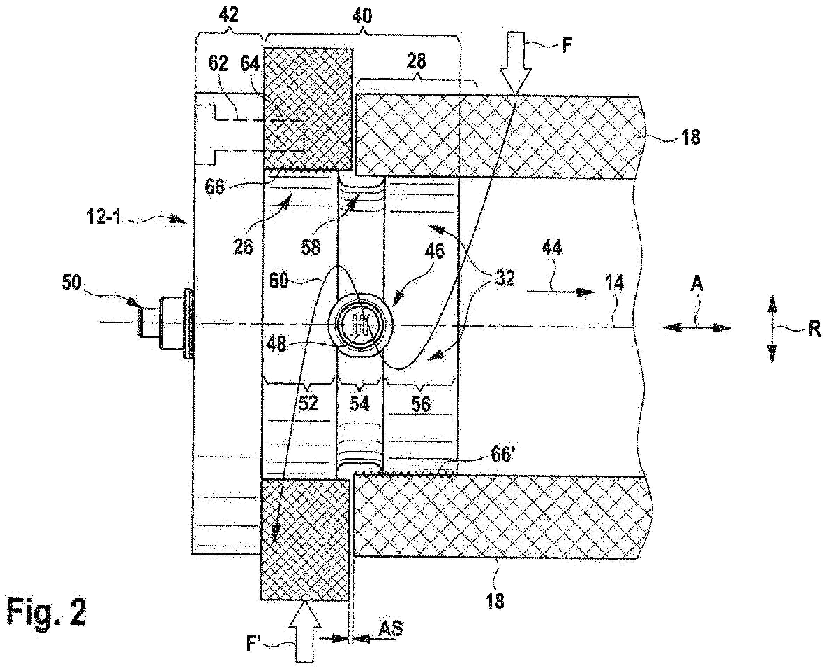

Ferner ist es bevorzugt, wenn der erste Abschnitt des Einführabschnitts ein Außengewinde aufweist, das in ein entsprechendes Innengewinde des Maschinengestells bzw. einer einer Durchgangsöffnung derselben eingreift, um den Einführabschnitt axial relativ zu positionieren (vgl. z.B. Fig. 2).

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine teilweise geschnittene Ansicht einer ersten Ausführungsform eines Kraftaufnehmersystems gemäß der Erfindung;
- Fig. 2: eine vergrößerte Darstellung des linken Teils der Fig. 1;
- Fig. 3: eine teilweise geschnitten dargestellte Ansicht einer zweiten Ausführungsform;
- Fig. 4: eine teilweise geschnitten dargestellte Ansicht einer dritten Ausführungsform;
- Fig. 5: eine teilweise geschnitten dargestellte Ansicht einer vierten Ausführungsform;
- Fig. 6: eine teilweise geschnitten dargestellte Ansicht einer leichten Abwandlung der Ausführungsform der Fig. 5;
- Fig. 7: eine weitere Ausführungsform in einer teilweise geschnitten dargestellten Ansicht, bei der eine Welle innerhalb des Kraftaufnehmersystems sitzt;
- Fig. 8: ein Foto eines herkömmlichen Rollenkopfes;
- Fig. 9: eine Schnittansicht eines herkömmlichen Kraftaufnehmersystems, das in den Rollenkopf der Fig. 8 eingebaut ist; und
- Fig.10: ein Foto einer Abspannung eines herkömmlichen Rollenkopfs.

Nachfolgend werden verschiedene Ausführungsformen beschrieben werden. Viele der Ausführungsformen werden sich nur leicht bzw. in wenigen Details voneinander unterscheiden. Um die Beschreibung möglichst einfach und verständlich zu halten, wird speziell auf die (wesentlichen) Unterschiede eingegangen werden. Merkmale, Elemente und Komponenten, die wiederkehrend und/oder unverändert bei den verschiedenen Ausführungsformen auftreten, werden nicht wiederholend beschrieben werden. Derartige Merkmale, Elemente und Komponenten sind insbesondere durch gleiche Bezugszeichen gekennzeichnet.

Auch sind Positions- und Orientierungsangaben (wie z.B. "oben", "unten", "axial", "radial", usw.) auf die jeweilige Figur bezogen. Es versteht sich, dass derartige Angaben aber nicht einschränkend zu verstehen sind, sondern an Positions- und Orientierungsänderungen (z.B. Drehung der Anordnung um 90° oder 180°) entsprechend anzupassen sind.

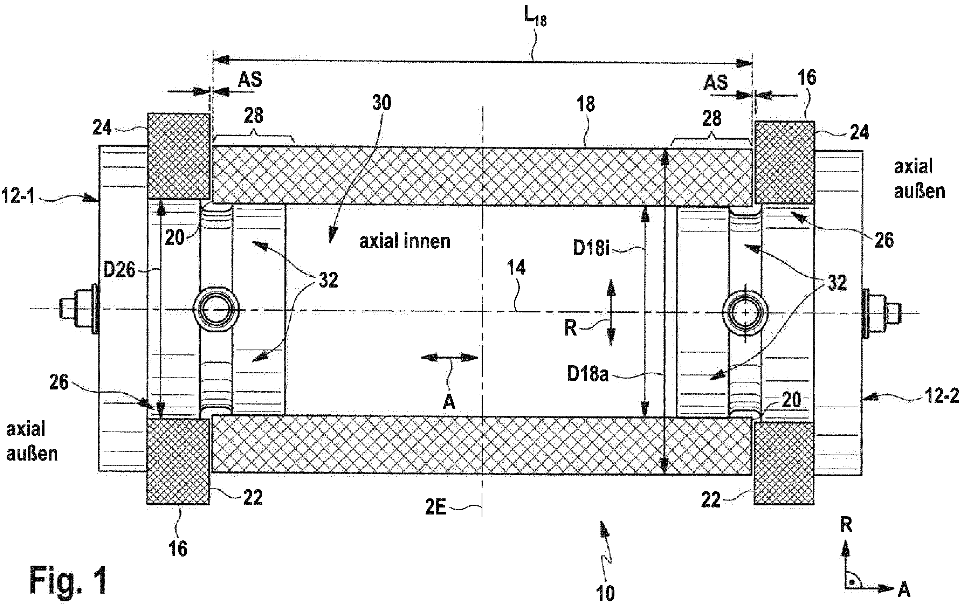

Fig. 1 zeigt eine teilweise geschnitten dargestellte Ansicht eines Kraftaufnehmersystems (das nachfolgend auch kurz nur als "System" bezeichnet wird) 10 in einem montierten Zustand. Fig. 1 zeigt eine erste Ausführungsform des Systems 10. Das System 10 umfasst hier zwei Messkörper 12-1 und 12-2. Generell reicht aber ein einziger Messkörper 12 aus, um ein brauchbares Messsignal zu erzeugen.

Üblicherweise ist das System 10 rotationssymmetrisch zu einer Maschinengestellachse 14 ausgebildet. Die Achse 14 stellt eine Montageachse für ein Gesamtsystem dar, das durch das Kraftaufnehmersystem 10, ein Maschinengestell 16 und eine Welle 18 gebildet wird. Die Welle 18 ist in der Fig. 1 als Hohlwelle ausgebildet. Die Welle 18 könnte aber auch als Vollwelle (vgl. z.B. Fig. 6) ausgebildet sein.

In der Fig. 1 nimmt das mehrteilig ausgebildete Maschinengestell 16 die Hohlwelle 18 axial zwischen sich auf. Es versteht sich, dass eine Ausgestaltung des Maschinengestells 16 und der Welle 18 anwendungsabhängig ist. Üblicherweise werden das Maschinengestell 16 und die Welle 18 vom Benutzer (Kunden) vorgegeben. In einigen Fällen kann es erforderlich sein, dass die Welle 18 nachbearbeitet oder ausgetauscht werden muss, um mit dem Messkörper 12 auf eine gewünschte Weise zusammenwirken zu können. Dies ist z.B. für das System der Fig. 5 der Fall, die nachfolgend noch näher beschrieben werden wird.

In der Fig. 1 weist die Welle 18 in der axialen Richtung A, die parallel zur Achse 14 orientiert ist, im montierten Zustand an beiden Stirnseiten 20 jeweils ein Axialspiel AS auf. Dies bedeutet, dass das Maschinengestell 16 und die Welle 18 im montierten Zustand in der axialen Richtung A zueinander beabstandet sind. Die Stirnseiten 20 der Welle 18 liegen axial innen angeordneten Stirnseiten 22 des Maschinengestells 16 axial beabstandet gegenüber. Die Welle 18 und das Maschinengestell 16 berühren sich nicht. Die Welle 18 kann aber axial "schwimmend" auf dem Messkörper 12 gelagert sein.

Das Gesamtsystem ist in Fig.1 z.B. spiegelsymmetrisch zu einer Zentralebene ZE ausgebildet, die durch eine Strichlinie in radialer Richtung R angedeutet ist und die senkrecht auf der Zeichnungsebene der Fig. 1 steht.

Das Maschinengestell 16 weist allgemein axial außen liegenden Stirnseiten 24 auf, die parallel zu den Stirnseiten 16 und zur Zentralebene ZE orientiert sind. Das Maschinengestell 16 weist ferner (axiale) Durchgangsöffnungen 26 auf, die koaxial zur Achse 14 orientiert sind. Die Durchgangsöffnungen 26 weisen jeweils einen (Innen-)Durchmesser D26 auf, der im Beispiel der Fig. 1 größer als ein Innendurchmesser D18i der Welle 18 ist. Ein Außendurchmesser D18a der Welle 18 ist größer als der Durchmesser D26 der Durchgangsöffnung 26 im Maschinengestell 16.

Die Messkörper 12-1 und 12-2 könnten gegeneinander ausgetauscht werden. Die Messkörper 12 sind genrell achsenartig ausgebildet. Die Messkörper 12 sitzen in Fig. 1 formschlüssig in axial außen liegenden Endabschnitten 28 der Welle 18. Eine axiale Länge der Endabschnitte 28 ist wesentlich kürzer als eine axiale Gesamtlänge L18 der Welle 18. Die axiale Länge des bzw. der Endabschnitte 28 ist in Fig. 1 exemplarisch dargestellt. Die axiale Länge jedes Endabschnitts 28 kann - in Bezug auf die Gesamtlänge L18 der Welle 18 - z.B. kleiner als 10 %, kleiner als 15 %, kleiner als 20 %, kleiner als 25 %, größer als 3 %, größer als 5 %, größer als 7 %, größer als 10 % und/oder größer als 15 % sein. Da die Welle 18 im Beispiel der Fig. 1 eine Hohlwelle ist, weist die Welle 18 einen sich axial erstreckenden, durchgängigen Kanal (Innenraum) 30 auf. Der Kanal 30 weist die Form eines Zylinders auf und ist koaxial zur Achse 14 orientiert und positioniert. An seinen stirnseitigen Enden bildet der (innere) Kanal 30 im Bereich der Endabschnitte 28 jeweils eine Aufnahmeöffnung 32 aus. Die Aufnahmeöffnungen 32 sind eingerichtet, den Messkörper 12 formschlüssig aufzunehmen. Die Aufnahmeöffnungen 32 können als Sacklöcher 34 bzw. 78 (vgl. Fig. 6) in der Welle 18 ausgebildet sein, wenn die Welle 18 eine Vollwelle ist. Dies bedeutet, dass eine radiale Abmessung des Messkörpers 12 im Wesentlichen dem Innendurchmesser D18i der Welle 18 entspricht. Ein existiert aber ein (kleines) radiales Spiel (nicht bezeichnet in Fig. 1) zwischen dem Messkörper 12 und der Welle 18.

Bezug nehmend auf Fig. 2 wird nachfolgend der Messkörper 12 näher beschrieben. Die Fig. 2 zeigt eine vergrößerte Darstellung eines links angeordneten Bereichs der Fig. 1, der wiederum den Messkörper 12-1 im montierten Zustand zeigt. Der Messkörper 12-1 weist generell - in der axialen Richtung A betrachtet - einen Einführabschnitt 40 und optional einen Flanschabschnitt 42 auf.

Der Einführabschnitt 40 ist eingerichtet, sowohl in das Maschinengestell 16 als auch in die Welle 18 formschlüssig - vorzugsweise axial von außen entlang der Achse 14 - eingeführt zu werden, wie es durch einen Pfeil 44 in Fig. 2 angedeutet ist. Sowohl der axial innen liegende Einführabschnitt 40 als auch der axial außen liegende Flanschabschnitt 42 sind vorzugsweise zylindrisch ausgebildet. Der Flanschabschnitt 42 dient als axialer Anschlag bzw. Einführbegrenzung, um eine (axiale) Eindringtiefe des Messkörpers 12 in die Welle 18 festzulegen. Die Eindringtiefe kann aber auch anders implementiert werden, wie es nachfolgend noch näher erläutert werden wird. Außerdem kann der Flanschabschnitt 42 einer Fixierung des Messkörpers 12 am Maschinengestell 16 und einer Kopplung der Welle 18 an das Maschinengestell 16 dienen, wie nachfolgend noch näher beschrieben werden wird.

Ferner können der Einführabschnitt 40 und der Flanschabschnitt 42 eingerichtet sein, Signalleitungen (hier nicht gezeigt) vorzuzgsweise in ihrem Inneren von axial außen zu einer Messzelle 46 zu leiten. Die Messzelle 46 weist einen Sensor auf, der exemplarisch in Form eines DMS 48 angedeutet ist. Die Positionierung und Ausgestaltung der Messzelle 46 bzw. des DMS 48 sind allgemein bekannt, so dass hierauf nicht näher eingegangen werden wird. Die Messzelle 46 ist mit einem Anschlusselement 50 verbunden, um Messsignale des DMS 48 an eine Auswertungseinheit (nicht gezeigt) zu übertragen. Alternativ kann eine integrierte Auswertungseinheit vorgesehen sein.

In der axialen Richtung A kann der Einführabschnitt 40 in einen ersten axialen Abschnitt 52, einen zweiten axialen Abschnitt 54 und einen dritten axialen Abschnitt 56 unterteilt werden. Der zweite axiale Abschnitt 54 sitzt in der axialen Richtung A zwischen dem ersten Abschnitt 52 und dem dritten Abschnitt 56. Der erste axiale Abschnitt 52 sitzt generell formschlüssig in der Durchgangsöffnung 26 des Maschinengestells 16 und stützt sich somit am Maschinengestell 16 ab. Der zweite axiale Abschnitt 54 weist generell eine radial außen vorgesehene Umfangsnut 58 auf, die eine geringere radiale Abmessung als der erste axiale Abschnitt 52 und der dritte axiale Abschnitt 56 aufweist. Die Umfangsnut 58 weist vorzugsweise eine Kontur auf, so dass - in der axialen Richtung A - ein Übergang zwischen dem ersten axialen Abschnitt 52 und dem dritten axialen Abschnitt 56 ohne Kontakt mit dem Maschinengestell 16 und der Welle 18 erfolgt. Die Umfangsnut 58 definiert eine axiale Länge des zweiten axialen Abschnitts 54. Der dritte axiale Abschnitt 56 ist eingerichtet, im montierten Zustand formschlüssig in (vgl. Fig. 2) oder auf (vgl. Fig. 7) der Welle 18 zu sitzen.

Eine hier nicht näher bezeichnete axiale Länge des ersten Abschnitts 52 ist exemplarisch kürzer gewählt als eine axiale Länge der Durchgangsöffnung 26 im Maschinengestell 16. Eine axiale Länge des dritten Abschnitts 56 ist - in Abhängigkeit von einer axialen Länge des zweiten Abschnitts 54 - so gewählt, dass der dritte Abschnitt 56 nicht über den Endabschnitt 28 der Welle 18 hinausreicht. Dies bedeutet, dass der dritte Abschnitt 56 nicht über den Endabschnitt 28 hinaus in die Welle 18 hineinreicht.

Durch den formschlüssigen Sitz des Messkörpers 12 im Maschinengestell 16 und innerhalb der Aufnahmeöffnung 32 der Welle 18 misst das Kraftaufnehmersystem 10 der Fig. 2 Scherkräfte. Im Normalfall wird eine Kraft F - vorzugsweise senkrecht - zur Achse 14 z.B. durch eine (hier nicht dargestellte) Seilrolle von radial außen auf die Welle 18 ausgeübt. Die Kraft F tritt in einen oberen Teil der Welle 18 ein, so dass sich ein normaler Kraftfluss einstellt, wie er in Fig. 2 durch einen Pfeil 60 angedeutet ist. Die Welle 18 kommt "oben", in der radialen Richtung R, in Anlage mit dem dritten Abschnitt 56. Der erste Abschnitt 52 kommt in der radialen Richtung R "unten" mit dem Maschinengestell 16 in Anlage, das eine abstützende Gegenkraft F' ausübt. Die Kraft F' ist in der Regel halb so groß wie die Kraft F, da die Fig. 2 nur die linke Hälfte der Fig. 1 zeigt und die nicht gezeigte rechte Hälfte eine entsprechende Gegenkraft ausübt, so dass die Summe der Gegenkräfte F' der einwirkenden Kraft F entspricht.

Allgemein gibt es verschiedene Alternativen, den Messkörper 12 in der axialen Richtung A relativ zum Maschinengestell 16 und/oder der Welle 18 zu positionieren bzw. das axiale Spiel AS unter allen Umständen sicherzustellen. Ferner gibt es verschiedene Alternativen, den Messkörper 12 am Maschinengestell 16 und/oder der Welle 18 zu fixieren.

In der Fig. 2 sind in der oberen Hälfte zwei Fixierungsalternativen mit Strichlinien angedeutet. Sofern der Flanschabschnitt 42 vorhanden ist, kann der Flanschabschnitt 42 z.B. eine oder mehrere Durchgangsöffnungen 62 aufweisen, die sich axial durch den Flanschabschnitt 42 erstrecken und die mit deckungsgleichen Aufnahmelöchern 64 zusammenwirken, wenn man in der Richtung der Achse 14 auf das System 10 schaut. Die Durchgangsöffnungen 62 sind radial außen in einem Bereich angeordnet, wo der Flanschabschnitt 42 das Maschinengestell 16 kragenförmig überlappt. Die Durchgangsöffnungen 62 sind in der Umfangsrichtung (Rotation um Achse 14), vorzugsweise gleichmäßig, verteilt angeordnet. Die Aufnahmelöcher 64 sind z.B. mit Innengewinden versehen, um z.B. passende Schrauben (in Fig. 2 nicht gezeigt und bezeichnet) aufzunehmen. Diese Schrauben verbinden den Messkörper 12 im montierten Zustand formschlüssig (in Umfangsrichtung) und kraftschlüssig (in axialer Richtung A) mit dem Maschinengestell 16.

Alternativ oder ergänzend kann die Durchgangsöffnung 26 im Maschinengestell 16 mit einem Gewinde 66 versehen sein, wie es ebenfalls im oberen Bereich der Fig. 2 angedeutet ist. Ein (hier nicht näher bezeichnetes) Außengewinde ist dann im ersten axialen Abschnitt 52 des Messkörpers 12 vorgesehen. Der Messkörper 12 kann in diesem Fall in das Maschinengestell 16 eingeschraubt werden und stellt so sicher, dass der Messkörper 12 in der axialen Richtung A unbeweglich zur Welle 18 sitzt. Wenn die Durchgangsöffnung 26 des Maschinengestells 16 und der erste Abschnitt 52 mit entsprechenden Gewinden versehen sind, wie es gerade beschrieben wurde, kann der Flanschabschnitt 42 vollständig weggelassen werden.

Ergänzend oder alternativ könnte der dritte Abschnitt 56 mit einem Außengewinde 66' versehen sein, das mit einem hier nicht näher bezeichneten Innengewinde in der Welle 18 zusammenwirkt, wie es exemplarisch im unteren Bereich der Fig. 2 angedeutet ist. Über die axiale Länge dieses Innengewindes der Welle 18 kann die Eindringtiefe des dritten Abschnitts 56 in die Welle 18 kontrolliert werden und somit kann auch das axiale Spiel AS zwischen dem Maschinengestell 16 und der Welle 18 genau eingestellt werden.

Alternativ zur Verbindung über das Außengewinde des dritten axialen Abschnitts 56 kann der dritte axiale Abschnitt 56 stoffschlüssig (z.B. durch Schweißen) mit der Welle 18 (dauerhaft) verbunden werden.

Fig. 3 zeigt eine zweite Ausführungsform, die analog zur ersten Ausführungsform der Fig. 2 dargestellt ist. Der Messkörper 12 der Fig. 3 unterscheidet sich vom Messkörper 12 der Fig. 1 und 2 im Wesentlichen dadurch, dass der dritte axiale Abschnitt 56 abgewandelt ist. Der dritte axiale Abschnitt 56 weist eine Axialrelativpositioniereinrichtung 70 auf. Die Axialrelativpositionierungseinrichtung 70 dient generell dazu, das axiale Spiel AS zwischen dem Maschinengestell 16 und der Welle 18 unter allen Umständen sicherzustellen.

Die Axialrelativpositioniereinrichtung 70 ist in Fig. 3 z.B. als ein radialer Vorsprung 72 im ansonsten zylindrischen, dritten axialen Abschnitt 56 ausgebildet. Der radiale Vorsprung 72 steht radial nach außen aus dem dritten axialen Abschnitt 56 vor und dient als (End-)Anschlag für die Welle 18, wenn sich die Welle 18 in der axialen Richtung A bewegt. Eine Position des radialen Vorsprungs 72 in der axialen Richtung A relativ zum dritten axialen Abschnitt 56 legt die (minimale) Größe des axialen Spiels AS fest, d.h. einen axialen Mindestabstand zwischen dem Maschinengestell 16 und der Welle 18. Der radiale Vorsprung 72 kann sich vollumfänglich (360°) erstrecken. Der radiale Vorsprung 72 kann alternativ diskret - vorzugsweise gleichmäßig - entlang der Umfangsrichtung verteilt angeordnet sein. Somit können ein oder mehrere radiale Vorsprünge 72 in der Umfangsrichtung vorgesehen sein (z.B. in Form von Sicherungsstiften), die in entsprechende radiale Ausnehmungen (nicht gezeigt) in dem dritten axialen Abschnitt 56 eingreifen. Der vollumfängliche radiale Vorsprung 72 kann einstückig mit dem dritten axialen Abschnitt 56 ausgebildet sein. Alternativ kann der vollumfängliche radiale Vorsprung 72 durch einen (hier nicht gezeigten und bezeichneten) Sicherungsring implementiert sein, der in eine entsprechende äußere radiale Nut (nicht gezeigt) im dritten axialen Abschnitt 56 sitzt.

Alternativ können eine oder mehrere Passfedern eingesetzt werden.

Fig. 4 zeigt eine weitere Ausführungsform des Messkörpers 12 in einer Darstellung gemäß den Fig. 2 und 3. Der Messkörper 12 der Fig. 4 unterscheidet sich vom Messkörper der Fig. 3 im Wesentlichen in der Implementierung der Axialrelativpositioniereinrichtung 70. Die Axialrelativpositioniereinrichtung 70 ist hier dadurch implementiert, dass der dritte Abschnitt 56 sich axial nach innen verjüngt. Der dritte Abschnitt 56 weist eine Außenkontur auf, die sich axial in Richtung der Aufnahmeöffnung 32 in der Welle 18 vorzugsweise konisch verjüngt. Ein Verjüngungswinkel zwischen der Außenkontur des dritten Abschnitts 56 und der Achse 14 bzw. einer (koaxialen) Innenwandung der (Hohl-)Welle 18 ist mit α bezeichnet. Die Innenwandung der Welle 18 kann ebenfalls eine sich konisch verjüngende Kontur aufweisen. Der dritte Abschnitt 56 der Fig. 4 würde jedoch auch mit dem konusfreien Endabschnitt 28 der Fig. 1 bis 3 zusammenwirken können und dennoch das axiale Spiel AS bzw. den axialen Mindestabstand zwischen dem Maschinengestell 16 und der Welle 18 sicherstellen. Bei der Ausführungsform 4 ist eine axial äußere, radiale Abmessung des dritten Abschnitts 56 größer als der Innendurchmesser D18i der Welle 18.

Fig. 5 zeigt eine weitere Ausführungsform des Systems 10 in einer Darstellung gemäß den Fig. 2 bis 4. Die Ausführungsform der Fig. 5 unterscheidet sich von den Ausführungsformen der Fig. 2 bis 4 im Wesentlichen dadurch, dass das System 10 neben dem Messkörper 12 auch die Welle 18 umfasst und dass die Relativpositioniereinrichtung sowohl durch den Messkörper 12, insbesondere den dritten axialen Abschnitt 56, als auch die Welle 18, insbesondere den Endabschnitt 28 der Welle 18, implementiert ist. Ferner weist der erste axiale Abschnitt 52 exemplarisch eine längere axiale Länge im Vergleich zu den ersten Abschnitten 52 der Fig. 2 bis 4 auf, indem der erste Abschnitt 52 im montierten Zustand axial über das Maschinengestell 16 hinausragt. Alternativ könnte das Maschinengestell 16 der Fig. 5 auch lediglich eine geringere axiale Abmessung als die Maschinengestelle 16 der Fig. 2 bis 4 aufweisen. Generell gilt, dass die axialen Längen der ersten bis dritten Abschnitte 52, 54 und 56 frei gewählt werden können, aber immer unter Berücksichtigung der jeweiligen Implementierungsform der Axialrelativpositioniereinrichtung 70 und der Vorgabe, dass das axiale Spiel AS unter allen Umständen sichergestellt ist.

Wie bereits gesagt, wird die Axialrelativpositioniereinrichtung 70 gemäß Fig. 5 durch ein Zusammenspiel des dritten Abschnitts 56 und der Welle 18 definiert. Der dritte Abschnitt 56 ist zylindrisch ausgebildet. Eine radiale Abmessung des dritten Abschnitts 56 ist hier exemplarisch größer als eine radiale Abmessung des ersten und zweiten Abschnitts 52 und 54, was im Wesentlichen dem Größenverhältnis der Radien der Welle 18 und der Durchgangsöffnung 26 geschuldet ist. Der dritte Abschnitt 56 sitzt formschlüssig in der Aufnahmeöffnung 32 der Welle 18. Die Aufnahmeöffnung 32 ist stufenförmig ausgebildet. In der Fig. 5 ist eine Stufe 74 in einer axialen Tiefe T74 in Bezug auf eine axiale Ausdehnung der Welle 18 gezeigt, wo der Innendurchmesser D18i der Welle 18 sprungartig verkleinert ist. Dies bedeutet, dass der Innendurchmesser D18i des Endabschnitts 28 der Welle 18 axial außen größer ist als ein axial innen liegender Innendurchmesser D18i des Endabschnitts 28. Die axiale Tiefe T74 stellt den axialen Abstand der Stufe 74 zur zugehörigen Stirnseite des Endabschnitts 28 dar.

Während einer Montage des Körpers 12 der Fig. 5 wird der Körper 12 mit seinem dritten Abschnitt 56 von axial außen entlang der Achse 14 in die Welle 18 hineinbewegt, bis eine axial innen liegende Stirnseite 76 des dritten Abschnitts 56 an die Stufe 74 anstößt bzw. daran anliegt.

Die axiale Länge des Einführabschnitts 40 und insbesondere des dritten Abschnitts 56 ist so auf die axiale Tiefe T74 der Stufe 74 abgestimmt, dass das axiale Spiel AS zwischen dem Maschinengestell 16 und der Welle 18 immer sichergestellt ist, auch wenn größere parasitäre Kräfte wirken. Eine Position des dritten Abschnitts 56 ist axial nach links fest relativ zur Welle 18 definiert, weil der Messkörper 12 über die Befestigung des Flanschabschnitts 42 und/oder des ersten Abschnitts 52 fest mit dem Maschinengestell 16 verbunden ist.

Eine hinsichtlich dieses Aspekts leicht abgewandelte Ausführungsform ist in Fig. 6 gezeigt, wobei das System 10 exemplarisch durch nur einen einzigen Messkörper 12 auf der rechten Seite der Gesamtanordnung implementiert ist. Hinsichtlich der Axialrelativpositioniereinrichtung 70 ist die Ausführungsform der Fig. 6 analog zu der Axialrelativpositioniereinrichtung 70 der Fig. 5 ausgebildet. Der dritte axiale Abschnitt 56 des Körpers 12 kann sich jedoch in der axialen Richtung A innerhalb der Aufnahmeöffnung 32 in der Welle 18 hin und her bewegen. Die Aufnahmeöffnung 32 wird durch ein Sackloch 34 oder 78 mit einem radial orientierten Boden 80 definiert. Der Boden 80 weist eine axiale Tiefe in Bezug auf eine axial außen liegende Stirnseite des Endabschnitts 28 auf, wobei die axiale Tiefe so gewählt ist, unter Berücksichtigung der axialen Länge des dritten Abschnitts 56, dass die Welle 18, die hier als Vollwelle ausgebildet ist, nicht axial an den zweiten Abschnitt 54 bzw. den Flanschabschnitt 42 anstoßen kann. Der Flanschabschnitt 52 ist hier zwischen dem zweiten axialen Abschnitt 54 und dem ersten axialen Abschnitt 52 angeordnet. Der Flanschabschnitt 42 liegt von "hinten" (links) an dem Maschinengestell 16 an. Der erste axiale Abschnitt 52 wird über ein weiteres Klemmelement 82 mit der axial außen liegenden Stirnseite des entsprechenden Maschinengestells 16 axial verspannt. Das Klemmelement 82 und der Flanschabschnitt 42 klemmen das Maschinengestell 16 axial zwischen sich ein und fixieren so die Relativposition des Messkörpers 12 relativ zum Maschinengestell 16.

In der Fig. 6 erkennt man, dass diese Ausführungsform des Systems 10 nur einen einzigen Messkörper 12 umfasst. Auf der axial gegenüberliegenden Seite ist kein weiterer Messkörper 12 vorgesehen. Die Welle 18 weist einen größeren Außendurchmesser auf als die Durchgangsöffnung 26 im links angeordneten Maschinengestell 16. In dieser Durchgangsöffnung 26 kann ein Koppelungsendelement 86 mit einer radial außen vorgesehenen Einkerbung 88 vorgesehen sein. Die Einkerbung 88 dient der Verdrehsicherung. Ferner sind nicht näher bezeichnete Schmiermittelkanäle gezeigt, die sich im Wesentlichen in der axialen Richtung zumindest teilweise durch die Welle 18 erstrecken, um durch z.B. fünf radial orientierte Abzweigungen an der Oberfläche der Welle 18 zu enden. Über die Schmiermittelkanäle kann Schmiermittel an die Orte der (hier nicht gezeigten) Seilscheiben transportiert werden.

Die Ausführungsform der Fig. 6 zeichnet sich u.a. dadurch aus, dass sich die Welle 18 und der dritte Abschnitt 56 axial relativ zueinander bewegen können, ohne dass es zu einer Verfälschung der Messsignale kommt. Ferner ist der dritte Abschnitt 56 im Bereich seiner Kontaktflächen mit dem Sackloch 78 abgerundet ausgebildet.

Fig. 7 zeigt eine weitere Ausführungsform des Systems 10 in einer Darstellung entsprechend den Fig. 2 bis 5. Die wesentliche Änderung gegenüber den anderen Ausführungsformen ist darin zu sehen, dass die Axialrelativpositioniereinrichtung 70 durch eine axial innen liegende stirnseitige Aufnahmeöffnung 90 im dritten Abschnitt 56 definiert ist, in welche die Welle 18 im montierten Zustand - vorzugsweise mit einem axialen Spiel - formschlüssig eingreift. Eine axiale Tiefe der stirnseitigen Aufnahmeöffnung 90 im dritten Abschnitt 56 ist entsprechend gewählt.

Bei der Ausführungsform der Fig. 7 ist der Außendurchmesser der Welle 18 kleiner als die radiale Abmessung bzw. der Durchmesser der Durchgangsöffnung 26 im Maschinengestell 16.

Eine weitere allgemeine Maßnahme, die hier nicht in Form einer separaten Figur dargestellt ist, ist darin zu sehen, dass die außen liegende Stirnseite der Welle 18 nicht senkrecht zur Achse 16 verläuft, sondern z.B. radial nach innen oder außen verjüngt ausgebildet ist. So können sich das Maschinengestell 16 und die Welle 18 maximal punktuell berühren, wenn überhaupt.

### BEZUGSZEICHENLISTE

- 10: Kraftaufnehmersystem/ System
- 12: Messkörper
- 14: Maschinengestellachse
- 16: Maschinengestell
- 18: Welle
- A: axiale Richtung
- R: radiale Richtung
- 20: Stirnseite von 18
- AS: Axialspiel
- ZE: Zentralebene
- 22: Stirnseite von 16, axial innen
- 24: Stirnseite von 16, axial außen
- 26: Durchgangsöffnung von 16
- D26: Durchmesser von 26
- D18i: Innendurchmesser von 18
- D18a: Außendurchmesser von 18
- 28: Endabschnitt von 18, axial außen
- L18: axiale (Gesamt-)Länge von 18
- 30: Kanal
- 32: Aufnahmeöffnung in 18
- 34: Sackloch
- 40: Einführabschnitt von 12
- 42: Flanschabschnitt
- 44: (Einführ-)Pfeil
- 46: Messzelle
- 48: DMS
- 50: Anschlusselement
- 52: erster axialer Abschnitt von 40
- 54: zweiter axialer Abschnitt von 40
- 56: dritter axialer Abschnitt von 40
- 58: Umfangsnut
- 60: normaler Kraftfluss
- 62: Durchgangsöffnung(en) in 42
- 64: Aufnahmelöcher in 16
- 66: Gewinde
- 70: Axialrelativpositioniereinrichtung
- 72: radialer Vorsprung
- 74: Stufe
- T74: axiale Tiefe von 74
- 76: Stirnseite von 56
- 78: Sackloch
- 80: Boden von 78
- 82: Klemmelement
- 84: Schraube
- 86: Koppelungsendelement
- 88: Einkerbung
- 90: Aufnahmeöffnung in 56

## Patentansprüche

1. Kraftaufnehmersystem (10) zum Messen einer Kraft (F) auf ein von einem Benutzer bereitgestelltes Maschinengestell (16), insbesondere einen Kran-Rollenkopf, das koaxial zu einer Maschinengestellachse (14) eine, vorzugsweise vom Benutzer bereitgestellte, Welle (18) aufnimmt, auf der mindestens eine Seilrolle platzierbar ist und die mindestens einen axialen Endabschnitt (28) aufweist, der vorzugsweise eine axial nach außen orientierte Aufnahmeöffnung (32) aufweist, wobei die Kraft (F, F') im Wesentlichen von radial außen, quer zur Maschinengestellachse (14) einwirkt, wobei das Kraftaufnehmersystem (10) mindestens einen Messkörper (12; 12-1, 12-2) aufweist, der in einem montierten Zustand, in welchem das Maschinengestell (16), die Welle (18) und das Kraftaufnehmersystem (10) dauerhaft aneinander gekoppelt sind, koaxial zur Maschinengestellachse (14) angeordnet ist, wobei jeder der Messkörper (12) einen Einführabschnitt (40) aufweist, der:
einen ersten axialen Abschnitt (52) aufweist, der eingerichtet ist, im montierten Zustand formschlüssig im Maschinengestell (16) zu sitzen, um den Messkörper (12) auf dem Maschinengestell (16) abzustützen;
einen zweiten axialen Abschnitt (54) aufweist, der zum Aufnehmen mindestens einer Messzelle (46) eingerichtet ist, die eine durch die Kraft (F, F') hervorgerufene mechanische Verformung des Messkörpers (12) in ein entsprechendes Signal umwandelt; und
einen dritten axialen Abschnitt (56) aufweist, der eingerichtet ist, im montierten Zustand formschlüssig in oder auf der Welle (18) zu sitzen;
wobei der zweite Abschnitt (54) durch eine Umfangsnut (58) zwischen dem ersten und dritten Abschnitt (52, 56) gebildet ist, und wobei der Einführabschnitt (40) eine axiale Gesamtlänge aufweist, die so kurz ist, dass im montierten Zustand nur der zweite und/oder dritte Abschnitt (56) axial in den Endabschnitt hineinragt oder dass maximal nur der Endabschnitt (28) axial in den dritten Abschnitt (56) hineinragt.

2. System nach Anspruch 1, wobei der dritte Abschnitt (56) und/oder der Endabschnitt (28) eine Axialrelativpositioniereinrichtung (70) aufweist, die die Welle (18) im montierten Zustand immer axial beabstandet zum Maschinengestell (16) hält.

3. System nach Anspruch 2, wobei die Axialrelativpositioniereinrichtung (70) des dritten Abschnitts (56) eine Außenkontur aufweist, die sich axial in Richtung einer Aufnahmeöffnung (32) des Endabschnitts (28), vorzugsweise konisch, verjüngt, wobei ein Verjüngunswinkel (Alpha) und eine axiale Länge des dritten Abschnitts (56) so gewählt sind, dass die Welle (18) im montierten Zustand nicht an das Maschinengestell (16) anstößt, wenn die Welle (18) und der dritte Abschnitt (56) axial maximal ineinander greifen.

4. System nach Anspruch 2, wobei das System (10) ferner die Welle (18) umfasst und wobei die Axialrelativpositioniereinrichtung (70) dadurch definiert ist, dass der dritte Abschnitt (56) zylindrisch ausgebildet ist und dass eine im Wesentlichen axial orientierte Innenkontur einer Aufnahmeöffnung (32) des Endabschnitts (28) der Welle (18) eine radiale Stufe (74) oder einen radialen Boden (80) aufweist, so dass im montierten Zustand eine Stirnseite (76) des dritten Abschnitts (56) flächig an der Stufe (74) oder dem Boden (80) anliegt.

5. System nach Anspruch 4, wobei eine axiale Länge des dritten Abschnitts (56) und eine axiale Tiefe (T74) der Stufe (74) oder des Bodens (80) in Bezug zu einer Stirnseite des Endabschnitts (28) sowie ein Außenkonturverlauf des zweiten Abschnitts (54) so auf einander abgestimmt sind, dass sich der dritte Abschnitt (56) und die Welle (18) so weit relativ zueinander axial bewegen können, bis der dritte Abschnitt (56) an die Stufe (74) oder den Boden (80) anstößt.

6. System nach Anspruch 2, wobei die Axialrelativpositioniereinrichtung (70) durch einen radial Vorsprung (72) im dritten Abschnitt (56) ausgebildet ist, dessen axiale Position entsprechend gewählt ist, wobei der dritte Abschnitt (56) im Wesentlichen zylindrisch ausgebildet ist.

7. System nach Anspruch 6, wobei der radiale Vorsprung (72) aufweist: einen Sicherungsring innerhalb einer Umfangsvertiefung im dritten Abschnitt (56); ein Außengewinde; eine Passfeder; oder mindestens einen, umfänglich diskret angeordneten Sicherungsstift.

8. System nach Anspruch 2, wobei die Axialrelativpositioniereinrichtung (70) durch eine stirnseitige Aufnahmeöffnung (90) im dritten Abschnitt (56) definiert ist, in welche die Welle (18) im montierten Zustand formschlüssig eingreift, wobei eine axiale Tiefe (T) der stirnseitigen Aufnahmeöffnung (90) im dritten Abschnitt (56) entsprechend gewählt ist.

9. System nach einem der Ansprüche 1 bis 8, wobei jeder der Messkörper (12) ferner einen Flanschabschnitt (42) aufweist, wobei der Flanschabschnitt (42), vorzugsweise einstückig, an den ersten oder zweiten Abschnitt (52, 54) angrenzt, so dass der Flanschabschnitt (42) einen kragenförmigen Anschlag bildet, der im montierten Zustand axial außen/innen am Maschinengestell (16) anliegt.

10. System nach Anspruch 9, wobei der Flanschabschnitt (42) radial außen eine oder mehrere Durchgangsöffnungen (62) aufweist, die in einer Umfangsrichtung, vorzugsweise gleichmäßig, verteilt angeordnet sind, um Befestigungsmittel aufzunehmen, die von axial außen form- und/oder kraftschlüssig in das Maschinengestell (16) eingreifen.

11. System nach einem der Ansprüche 1 bis 10, wobei der erste Abschnitt (52) des Einführabschnitts (40) eine Außengewinde aufweist, das in ein Innengewinde des Maschinengestells (16) eingreift, um den Einführabschnitt (40) axial relativzupositionieren.

## Claims

1. A force-transducer system (10) for measuring a force (F) on a user-provided machine frame (16), in particular on a pulley head of a crane, which receives, coaxially to an axis (14) of the machine frame, a shaft (18), which is preferably provided by the user, wherein at least one rope sheave is placeable thereon, and comprising at least an axial end portion (28), which preferably comprises a receiving opening (32) orientated axially towards an outside, wherein the force (F, F') acts substantially radially from the outside transversally to the axis (14) of the machine frame, wherein the force-transducer system (10) comprises at least one measuring body (12; 12-1, 12-2) which is arranged in a mounted state, in which the machine frame (16), the shaft (18), and the force-transducer system (10) are coupled to each other permanently, coaxially to the axis (14) of the machine frame, wherein each of the measuring bodies (12) comprises an inserting portion (40) which:
comprises a first axial portion (52) being configured to sit in a mounted state in a form-closed manner within the machine frame (16) for supporting the measuring body (12) on the machine frame (16);
comprises a second axial portion (54) being configured for receiving at least one measuring cell (46), which converts a mechanical deformation of the measuring body (12), which is caused by the force (F, F'), into a corresponding signal; and
comprises a third axial portion (56) being configured to sit in a mounted state in a form-closed manner in or on the shaft (18);
wherein the second portion (54) is formed by a circumferential groove (58) between the first and third portions (52, 56), and wherein the inserting portion (40) comprises an axial overall length which is that short that in the mounted state only the second and/or third portion (56) project axially into the end portion or that, at maximum, only the end portion (28) projects axially into the third portion (56).

2. The system of claim 1, wherein the third portion (56) and/or the end portion (28) comprise an axial-relative positioning device (70) which holds the shaft (18) in the mounted state always axially distanced to the machine frame (16).

3. The system of claim 2, wherein the axial-relative positioning device (70) of the third portion (56) comprises an outer contour tapering axially towards a receiving opening (32) of the end portion (28), preferably conically, wherein a tapering angle (alpha) and an axial length of the third portion (56) are selected such that the shaft (18) in a mounted state does not abut against the machine frame (16) when the shaft (18) and the third portion (56) engage axially at maximum into each other.

4. The system of claim 2, wherein the system (10) further includes the shaft (18), and wherein the axial-relative positioning device (70) is defined in that the third portion (56) is formed cylindrically, and in that a substantially axially orientated inner contour of a receiving opening (32) of the end portion (28) of the shaft (18) comprises a radial step (74) or a radial bottom (80) so that in the mounted state a front side (76) of the third portion (56) abuts with an area against the step (74) or the bottom (80).

5. The system of claim 4, wherein an axial length of the third portion (56) and an axial depth (T74) of the step (74) or the bottom (80) are adjusted to each other in relation to a front side of the end portion (28) as well as a course of an outer contour of the second portion (54) such that the third portion (56) and the shaft (18) can move relative to each other axially so far until the third portion (56) abuts against the step (74) or the bottom (80).

6. The system of claim 2, wherein the axial-relative positioning device (70) is formed by a radial projection (72) in the third portion (56), an axial position of which is selected correspondingly, wherein the third portion (56) is formed substantially cylindrically.

7. The system of claim 6, wherein the radial projection (72) comprises: a securing ring within a circumferential recess in the third portion (56); an outer thread; a spring key; or at least one securing pin arranged discretely in a circumferential direction.

8. The system of claim 2, wherein the axial-relative positioning device (70) is defined by a front-end sided receiving opening (90) into the third portion (56), into which the shaft (18) engages in the mounted state in a form-closed manner, wherein an axial depth (T) of the front-end sided receiving opening (90) in the third portion (56) is selected correspondingly.

9. The system of any of claims 1 to 8, wherein each of the measuring body (12) further comprises flange portion (42), wherein the flange portion (42) is adjacent, preferably integrally, to the first or second portion (52, 54) so that the flange portion (42) forms a collar-shaped stopper which in the mounted state lies axially externally/internally to the machine frame (16).

10. The system of claim 9, wherein the flange portion (42) comprises one or more passage openings (62) radially at the outside, which are arranged in a circumferential direction, preferably regularly, in a distributed manner for receiving fastening means which engage the machine frame (16) axially from the outside in a form-closed and/or force-closed manner.

11. The system of any of claims 1 to 10, wherein the first portion (52) of the inserting portion (40) comprises an outer thread engaging an inner thread of the machine frames (16) for positioning relatively the inserting portion (40) axially.

## Revendications

1. Système de capteurs de force (10) destiné à mesurer une force (F) sur un châssis de machine (16) mis à disposition par un utilisateur, notamment sur une tête à poulie d'une grue, qui réceptionne de manière coaxiale à un axe de châssis de machine (14) un arbre (18), mis à disposition de préférence par l'utilisateur, sur lequel est susceptible d'être placé au moins une poulie et qui comporte au moins un tronçon d'extrémité axiale (28), qui comporte de préférence un orifice de logement (32) orienté vers l'extérieur, en direction axiale, la force (F, F') agissant sensiblement à partir de l'extérieur, en direction radiale à la transversale de l'axe de châssis de machine (14), le système de capteurs de force (10) comportant au moins un élément de mesure (12 ; 12-1, 12-2), qui à l'état monté, dans laquelle le châssis de machine (16), l'arbre (18) et le système de capteurs de force (10) sont durablement couplés les uns aux autres, est placé de manière coaxiale à l'axe de châssis de machine (14), chacun des éléments de mesure (12) comportant un tronçon d'introduction (40), qui :
comporte un premier tronçon axial (52) qui est aménagé pour être logé par complémentarité de forme dans le châssis de machine (16), à l'état monté, pour soutenir l'élément de mesure (12) sur le châssis de machine (16) ;
comporte un deuxième tronçon axial (54) qui est aménagé pour recevoir au moins une cellule de mesure (46) qui convertit une déformation mécanique provoquée par la force (F, F') de l'élément de mesure (12) en un signal correspondant ; et
comporte un troisième tronçon axial (56) qui est aménagé pour être logé par complémentarité de forme dans l'arbre (18), à l'état monté ;
le deuxième tronçon (54) étant créé par une rainure périphérique (58) entre les premier et troisième tronçons (52, 56) et le tronçon d'introduction (40) présentant une longueur totale axiale qui est si courte qu'à l'état monté, seul le deuxième et/ou le troisième tronçon (56) saillisse en direction axiale dans le tronçon d'extrémité ou qu'au maximum, seulement le tronçon d'extrémité (28) saillisse en direction axiale dans le troisième tronçon (56).

2. Système selon la revendication 1, le troisième tronçon (56) et/ou le tronçon d'extrémité (28) comportant un système de positionnement relatif axial (70) qui à l'état monté, maintient toujours l'arbre (18) avec un écart axial par rapport au châssis de machine (16).

3. Système selon la revendication 2, le système de positionnement relatif axial (70) du troisième tronçon (56) présentant un contour extérieur qui se rétrécit, de préférence sous forme conique dans la direction axiale vers un orifice de logement (32) du tronçon d'extrémité (28), un angle de rétrécissement (alpha) et une longueur axiale du troisième tronçon (56) étant sélectionnés de telle sorte qu'à l'état monté, l'arbre (18) ne heurte pas le châssis de machine (16) lorsque l'arbre (18) et le troisième tronçon (56) s'engagent au maximum l'un dans l'autre en direction axiale.

4. Système selon la revendication 2, le système (10) comprenant par ailleurs l'arbre (18) et le système de positionnement relatif axial (70) étant défini en ce que le troisième tronçon (56) est conçu sous forme cylindrique et en ce qu'un contour interne orienté sensiblement en direction axiale d'un orifice de logement (32) du tronçon d'extrémité (28) de l'arbre (18) comporte un échelon (74) radial ou un fond (80) radial, de sorte qu'à l'état monté, une face frontale (76) du troisième tronçon (56) s'appuie à pleine surface sur l'échelon (74) ou sur le fond (80).

5. Système selon la revendication 4, une longueur axiale du troisième tronçon (56) et une profondeur axiale (T74) de l'échelon (74) ou du fond (80) en rapport à une face frontale du tronçon d'extrémité (28) ainsi qu'un trajet de contour extérieur du deuxième tronçon (54) étant adaptés les uns aux autres de telle sorte que le troisième tronçon (56) et l'arbre (18) puissent se déplacer l'un vers l'autre aussi loin en direction axiale jusqu'à ce que le troisième tronçon (56) heurte l'échelon (74) ou le fond (80).

6. Système selon la revendication 2, le système de positionnement relatif axial (70) étant conçu par une saillie radiale (72) dans le troisième tronçon (56) dont la position axiale est sélectionnée en conséquence, le troisième tronçon (56) étant conçu sous forme sensiblement cylindrique.

7. Système selon la revendication 6, la saillie radiale (72) comportant : une bague de blocage à l'intérieur d'un creux périphérique dans le troisième tronçon (56) ; un filetage ; une clavette ; ou au moins une tige de blocage, placée discrètement en périphérie.

8. Système selon la revendication 2, le système de positionnement relatif axial (70) étant défini par un orifice de logement (90) frontal dans le troisième tronçon (56), dans lequel à l'état monté, l'arbre (18) s'engage par complémentarité de forme, une profondeur axiale (T) de l'orifice de logement (90) frontal dans le troisième tronçon (56) étant sélectionnée en conséquence.

9. Système selon l'une quelconque des revendications 1 à 8, chacun des éléments de mesure (12) comportant en outre un tronçon formant bride (42), le tronçon formant bride (42) jouxtant de préférence en monobloc le premier ou le deuxième tronçon (52, 54), de telle sorte que le tronçon formant bride (42) forme une butée en forme de collerette, qui à l'état monté s'appuie en direction axiale à l'extérieur/à l'intérieur sur le châssis de machine (16).

10. Système selon la revendication 9, le tronçon formant bride (42) comportant sur l'extérieur en direction radiale un ou plusieurs orifices de passage (62), qui dans une direction périphérique sont placés en étant distribués de préférence de manière régulière, pour recevoir des moyens de fixation, qui à partir de l'extérieur en direction axiale s'engagent par complémentarité de forme et/ou de force dans le châssis de machine (16).

11. Système selon l'une quelconque des revendications 1 à 10, le premier tronçon (52) du tronçon d'introduction (40) comportant un filetage qui s'engage dans un taraudage du châssis de machine (16), pour assurer le positionnement relatif en direction axiale du tronçon d'introduction (40).
